# DEMANDE DE BREVET EUROPEEN

(11) **EP 4 821 816 A1**
(43) Date de publication de la demande: **14.10.2026**
(21) Numéro de dépôt: 26168488.0
(22) Date de dépôt: 27.03.2026
(51) Int. Cl.: B64D 11/06

(54) **TABLETTE REPAS POUR SIÈGE D'AÉRONEF, DÉPLOYABLE PAR UN MOUVEMENT COMPOSÉ LIMITANT SON ENCOMBREMENT**

(30) Priorité: 08.04.2025 FR 2503696
(71) Demandeur: Airbus Atlantic, 17300 Rochefort (FR)
(72) Inventeur: CLOET, Frédéric, 17300 Rochefort (FR)
(74) Mandataire: Santarelli

(57) **Abrégé**

L'invention porte sur une tablette repas (100) pour siège passager (200) d'aéronef, comprenant un plateau (10) déployable, un premier support (20), sur lequel le plateau est articulé, et une interface (40) de fixation dans un environnement du siège, ladite tablette comprenant un deuxième support (30) sur lequel le premier support (20) est monté coulissant suivant une direction de translation (T) parallèle au plan du plateau ; le deuxième support (30) étant monté coulissant sur l'interface (40) suivant la même direction de translation (T), de sorte que lesdits supports sont déployables par télescopage ; le plateau (10) étant monté rotatif sur le premier support (20), autour d'un axe de rotation (R) perpendiculaire au plan du plateau ; les mouvements de coulissement des supports (20, 30) et de rotation du plateau (10) étant couplés, de sorte que ledit plateau effectue une rotation progressive et automatique pendant son déploiement et son rangement.

## Description

### DOMAINE TECHNIQUE

La présente invention appartient au domaine des équipements d'aménagement intérieur de cabines d'avions, notamment les tablettes repas déployables. Elle concerne plus particulièrement une tablette repas déployable par un mouvement composé, de translation - rotation, permettant de réduire son encombrement. L'invention trouve une application directe, mais non exclusive, dans les sièges passagers des classes supérieures (classe affaires et première classe) d'avions commerciaux.

### ÉTAT DE L'ART

Depuis l'apparition de l'aviation commerciale, l'aménagement intérieur des cabines d'aéronefs constitue un enjeu majeur pour améliorer le confort et l'expérience des passagers, en particulier dans les classes affaires et première classe. Parmi les équipements clés destinés à renforcer ce confort, les tablettes repas occupent une place essentielle en permettant aux passagers de disposer d'une surface stable pour leurs repas, leur travail ou leurs loisirs pendant le vol. Initialement, les tablettes repas étaient simplement intégrées dans le dossier du siège situé devant le passager. Dans cette configuration classique, la tablette est rabattable, passant d'une position verticale de rangement à une position horizontale d'utilisation. Toutefois, cette solution présente d'importantes contraintes ergonomiques, notamment parce qu'elle dépend de l'inclinaison du dossier avant : si ce dernier est trop incliné, l'espace utile pour l'utilisation confortable de la tablette s'en trouve considérablement réduit.

Pour répondre à ces contraintes, une deuxième génération de tablettes repas est apparue, intégrée directement au siège ou à une console latérale adjacente. Dans ce cas, la tablette est généralement rangée dans un accoudoir ou dans une console spécifiquement prévue à cet effet, sous une forme rétractable et déployable. Typiquement, ces tablettes sont extraites par un mouvement de pivotement ou de translation linéaire, grâce à un mécanisme articulé qui guide la tablette jusqu'à sa position finale face au passager. Cependant, ces solutions introduisent d'autres difficultés importantes. D'une part, elles impliquent souvent des mécanismes complexes, comportant des charnières multiples ou des rails de guidage susceptibles d'engendrer des coûts de fabrication et d'entretien élevés. D'autre part, la tablette stockée en longueur, du fait des contraintes dimensionnelles imposées par les espaces limités en cabine, présente généralement une forme étroite et allongée une fois déployée. Cette géométrie étroite et profonde se révèle peu confortable pour le passager, car elle limite la largeur utile devant lui, réduisant ainsi le confort d'usage lors des repas ou du travail.

Par ailleurs, lorsque les tablettes repas sont déployées, elles bloquent souvent l'espace devant le passager, obligeant ce dernier à ranger complètement la tablette dès qu'il souhaite quitter son siège pour se rendre dans le couloir ou ailleurs dans la cabine. Cette contrainte est particulièrement pénalisante lors des vols longs, durant lesquels les passagers se déplacent fréquemment pour accéder aux toilettes, pour se dégourdir les jambes ou simplement pour interagir avec les autres occupants de la cabine. De plus, le rangement nécessaire de la tablette avant chaque sortie du siège engendre des mouvements répétitifs et contraignants, pouvant être perçus comme une nuisance par les passagers, tout particulièrement lorsque ces mouvements doivent être effectués fréquemment.

Ces inconvénients techniques et ergonomiques, largement reconnus par les spécialistes en aménagement intérieur des cabines d'avion, ont fait l'objet de diverses tentatives de solutions. À titre d'exemple, certains dispositifs connus dans l'art antérieur proposent des mécanismes de rotation ou de translation combinés, afin de rendre la tablette plus ergonomique une fois déployée. Cependant, malgré les améliorations apportées, ces systèmes restent généralement encombrants, nécessitant des logements plus volumineux que nécessaire, et imposent toujours des manipulations fastidieuses au passager. Une consultation approfondie des solutions actuelles confirme en outre que les mécanismes existants ne permettent pas, ou seulement très difficilement, au passager de quitter son siège sans replier préalablement la tablette repas.

Ainsi, malgré ces tentatives pour améliorer la configuration et le mode d'utilisation des tablettes repas, aucune solution connue ne propose un compromis satisfaisant combinant à la fois une utilisation ergonomique optimale, une compacité maximale du dispositif de rangement et une liberté totale de déplacement du passager lorsqu'il souhaite quitter son siège pendant que la tablette est en position déployée. L'état de l'art actuel reste donc en attente d'une solution technique permettant de résoudre simultanément ces contraintes et d'offrir une expérience significativement améliorée au passager en termes de confort d'utilisation, de praticité et d'intégration optimale dans l'espace limité disponible à bord des aéronefs commerciaux.

### PRÉSENTATION DE L'INVENTION

La présente invention vise à pallier tout ou partie des inconvénients de l'art antérieur exposés ci-avant en proposant une solution innovante, optimisant l'ergonomie d'une tablette repas tout en réduisant son encombrement.

À cet effet, la présente invention a pour objet une tablette repas pour siège passager d'aéronef, comprenant un plateau déployable, formant une surface d'utilisation pour le passager, un premier support, sur lequel le plateau est articulé, et une interface de fixation de ladite tablette dans un environnement du siège. Cette tablette repas est remarquable en ce qu'elle comprend un deuxième support sur lequel le premier support est monté coulissant suivant une direction de translation parallèle au plan du plateau ; en ce que le deuxième support est monté coulissant sur l'interface suivant la même direction de translation, de sorte que lesdits supports sont déployables par télescopage ; en ce que le plateau est monté rotatif sur le premier support, autour d'un axe de rotation perpendiculaire au plan du plateau ; et en ce que les mouvements de coulissement des supports et de rotation du plateau sont couplés, de sorte que ledit plateau effectue une rotation progressive et automatique pendant son déploiement et son rangement.

Selon un aspect de l'invention, la tablette présente une position rangée, dans laquelle le plateau est intégralement et longitudinalement stocké sous l'interface, et une position complètement déployée dans laquelle le plateau est placé transversalement devant le siège.

Selon un aspect de l'invention, la tablette présente en outre une position intermédiaire dans laquelle le plateau est partiellement déployé suivant une direction oblique par rapport au siège, ledit plateau laissant une distance par rapport au siège suffisante pour permettre la sortie du passager aussi bien par la gauche que par la droite selon l'emplacement d'un couloir de sortie.

Selon un mode de réalisation, le premier support est monté coulissant à l'intérieur du deuxième support, lesdits supports étant ainsi emboitables.

Selon un mode de réalisation, le premier support comporte une extrémité recevant le plateau et configurée pour surélever ledit plateau au-dessus du deuxième support et au-dessous de l'interface.

Selon un mode de réalisation, l'interface comporte sur sa face inférieure des rails de coulissement du deuxième support.

Plus particulièrement, les rails sont inclinés par rapport à une direction longitudinale de l'interface pour augmenter la course du deuxième support.

Selon un mode de réalisation, la tablette comprend un mécanisme d'actionnement configuré pour assurer le coulissement simultané des premier et deuxième support et la rotation synchronisée et progressive du plateau, ledit mécanisme comprenant : un premier pignon lié au plateau et monté dans une première courroie crantée liée au premier support, ladite première courroie crantée glissant sur une came liée au deuxième support, ledit deuxième support comprenant une deuxième courroie entrainant en translation le premier support via un premier étage de glissière, ladite deuxième courroie étant elle-même entrainée en translation par un deuxième pignon du deuxième support coopérant avec une crémaillère de l'interface, ledit deuxième pignon entrainant le deuxième support via un deuxième étage de glissière.

Avantageusement, la came présente une courbure définissant le chemin de la première courroie et la trajectoire du plateau.

L'invention a également pour objet une unité de siège pour passager d'avion, comprenant un siège et une tablette repas telle que présentée, installée devant ledit siège.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif un mode de réalisation d'une tablette repas, conforme aux principes de l'invention.

### BRÈVE DESCRIPTION DES FIGURES

Les figures sont données à titre purement illustratif pour une meilleure compréhension de l'invention sans en limiter la portée. Les différents éléments peuvent être représentés de manière schématique et ne sont pas nécessairement à l'échelle. Sur l'ensemble des figures, les éléments identiques ou équivalents portent la même référence numérique.

Il est ainsi illustré en :
- Figure 1 : une vue en perspective d'une tablette repas dans sa position complétement déployée selon un mode de réalisation de l'invention ;
- Figure 2 : une autre vue en perspective, de dessous, de la tablette repas ;
- Figure 3 : une vue en perspective de dessous de la tablette repas dans sa position rangée ;
- Figure 4 : des vues en perspective isométrique de la tablette repas en position rangée (a), en position semi déployée (b) laissant une distance suffisante de sortie du passager, et en position complètement déployée (c) ;
- Figure 5 : des vues de dessus de la tablette repas dans les trois positions précédentes ;
- Figure 6 : un schéma cinématique simplifié de la tablette repas dans ces trois positions précédentes ;
- Figure 7 : une vue de dessus montrant la trajectoire de la tablette repas lors d'un déploiement ou rangement, avec différentes positions successives du plateau.

### DESCRIPTION DÉTAILLÉE DE MODES DE RÉALISATION

Dans le mode de réalisation décrit ci-après, on fait référence à une tablette repas pour siège passager d'avion, permettant à un passager d'utiliser la surface utile de cette tablette pour prendre son repas ou poser des objets personnels. Cette tablette est principalement destinée aux sièges passagers des classes supérieurs (classe affaires et première classe).

Dans le cadre de la présente invention, les termes « tablette repas » ou simplement « tablette » désignent l'ensemble fonctionnel formé par le plateau proprement dit, constituant la surface utile destinée à recevoir des objets tels que des plateaux-repas, des dispositifs électroniques ou des effets personnels du passager, ainsi que l'ensemble des éléments mécaniques d'actionnement configurés pour permettre le rangement et le déploiement dudit plateau, y compris l'interface de fixation destinée à assurer l'intégration de la tablette dans l'environnement du siège passager. Cet ensemble fonctionnel forme un système cohérent et autonome.

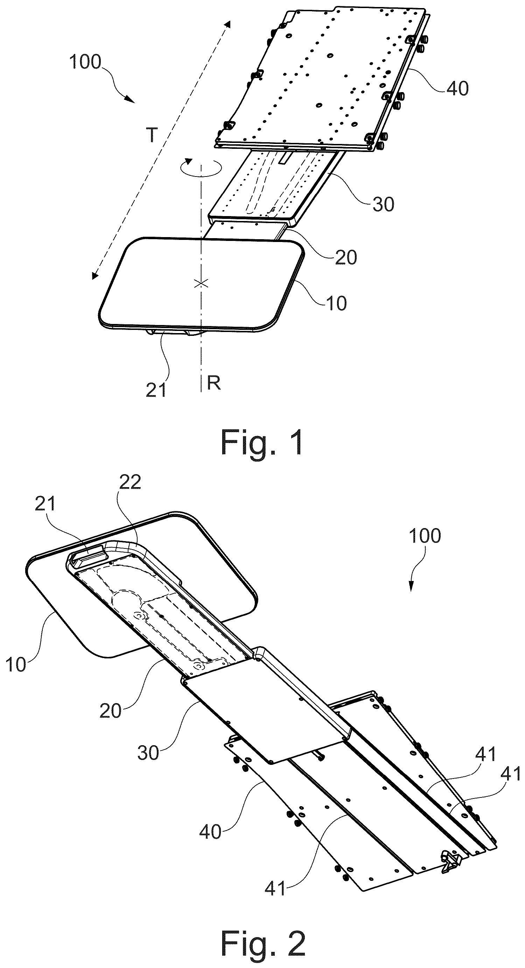

La figure 1 représente une tablette repas 100 pour siège passager, dans une position complètement déployée, permettant ainsi de visualiser précisément les éléments constitutifs et leurs interactions mécaniques. La tablette repas 100 comprend un plateau 10, un premier support 20 sur lequel le plateau est monté rotatif, un deuxième support 30 coopérant avec le premier par emboitement coulissant, et une interface de fixation 40 sur laquelle le deuxième support est monté coulissant, celle-ci étant destinée à assurer la liaison mécanique entre la tablette repas 100 et son environnement siège, non représenté, par exemple un espace dans le siège d'en face prévu à cet effet.

Le plateau 10 constitue la surface utile destinée à recevoir notamment un repas, un ordinateur portable ou tout autre objet personnel du passager. Ce plateau présente une forme globalement rectangulaire, avantageusement arrondie aux coins pour améliorer le confort d'utilisation.

Le plateau 10 est monté rotatif sur le premier support 20 autour d'un axe de rotation R sensiblement perpendiculaire au plan du plateau 10. Cette caractéristique permet au plateau 10 d'effectuer un pivotement dans son plan afin de modifier son orientation et offrir au passager une surface ergonomiquement optimisée lorsque la tablette repas 100 est complètement déployée. En effet, cette rotation est automatique et se fait progressivement lors du déploiement, en étant couplée au coulissement des supports 20 et 30, jusqu'à ce que le plateau 10 se présente devant le passager suivant sa longueur comme représenté sur la figure 1.

Le premier support 20 présente une forme globalement allongée et plane, destinée à assurer une liaison mécanique stable avec le plateau 10. Ce premier support 20 est monté coulissant à l'intérieur du deuxième support 30 suivant une direction de translation T parallèle au plan du plateau 10 et s'étendant suivant une direction longitudinal des supports 20 et 30, permettant ainsi une extension longitudinale maîtrisée de la tablette repas 100 lorsqu'elle passe de sa position rangée à sa position déployée et inversement.

Le deuxième support 30 constitue un élément structurel intermédiaire dans la cinématique de la tablette repas 100. Il présente une forme générale allongée, configurée pour accueillir en coulissement le premier support 20 suivant la direction de translation T. En complément, ce deuxième support 30 est lui-même monté coulissant à l'intérieur de l'interface de fixation 40 selon la même direction de translation T.

Cette double configuration coulissante entre les supports 20 et 30 et entre le support 30 et l'interface 40 permet ainsi d'obtenir un effet télescopique particulièrement avantageux, assurant une course utile significative pour la tablette repas 100 tout en limitant au strict minimum l'encombrement en position rangée comme il sera expliqué plus loin.

Enfin, l'interface de fixation 40 assure l'intégration mécanique de la tablette repas 100 à son environnement immédiat du siège passager, typiquement sous l'écran du siège d'en face dans un espace prévu à cet effet. Cette interface de fixation 40 comporte des moyens appropriés de fixation, tels que des attaches rapides ou tout autre dispositif équivalent permettant une fixation solide et stable à l'environnement du siège. Elle est dimensionnée pour accueillir intégralement le plateau 10 et les supports 20 et 30 en position rangée et permettre un déploiement optimal sans gêner le passager ni affecter négativement l'esthétique générale du siège.

On remarquera enfin que la tablette 100 comporte en partie inférieure des éléments additionnels tels qu'une poignée 21 solidaire du premier support 20, facilitant ainsi sa manipulation, notamment pour initier aisément la cinématique de déploiement et de rangement de ladite tablette.

Les interactions mécaniques entre ces différents composants de la tablette repas 100 assurent ainsi une cinématique complexe et parfaitement maîtrisée, permettant de combiner efficacement rotation et translation afin d'offrir au passager une surface ergonomique adaptée, tout en limitant rigoureusement l'encombrement de la tablette en position rangée.

La figure 2 représente la tablette repas 100 sous un angle différent pointant vers le bas, afin de mieux visualiser la poignée 21 et des éléments du mécanisme de coulissement.

La poignée 21, idéalement placée pour faciliter la préhension par le passager, présente une forme ergonomique permettant une manipulation aisée et intuitive, notamment lors des phases initiales du mouvement de déploiement ou lors du rangement de la tablette.

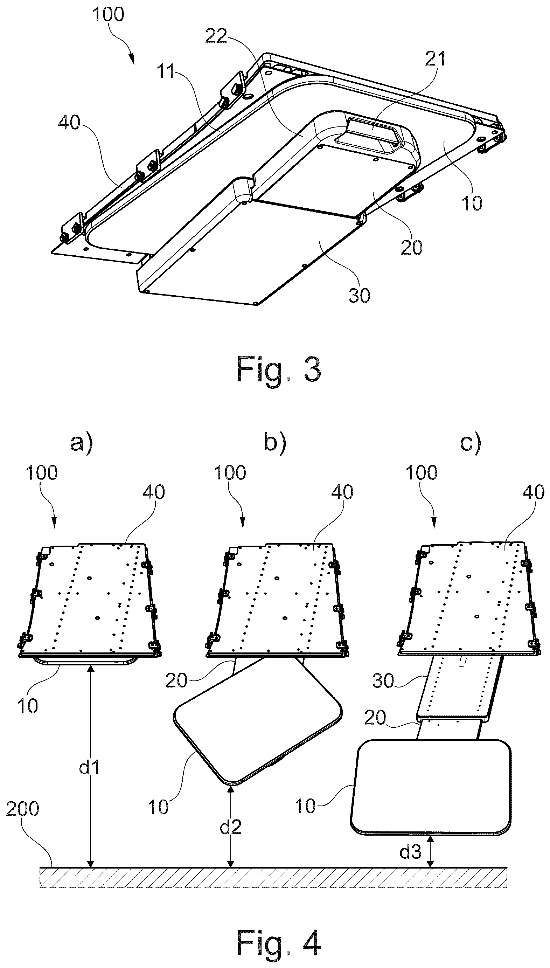

La figure 2 montre également la forme étendue du premier support 20 qui se prolonge sur toute la largeur du plateau 10 et se termine par une extrémité 22 surélevant ledit plateau au-dessus du niveau du deuxième support 30 et au-dessous du niveau de l'interface 40 pour permettre son rangement entre les deux comme représenté sur la figure 3.

La coopération coulissante entre le premier support 20 et le deuxième support 30 est assurée par un guidage mécanique interne, avantageusement constitué par des éléments coulissants non visibles ici mais agencés à l'intérieur desdits supports. Ce guidage garantit la fluidité du coulissement tout en assurant une rigidité mécanique, essentielle à la stabilité du plateau 10 lorsqu'il supporte une charge.

Toujours en référence à la figure 2, l'interface de fixation 40 comporte des rails de coulissement 41 intégrés, ménagés dans sa face inférieure. Les rails 41 assurent un guidage du deuxième support 30, lors du coulissement. Ces rails de coulissement 41 sont préférentiellement réalisés en matériaux à faible friction et haute résistance à l'usure.

Les rails de coulissement 41 ne sont pas strictement parallèles à l'axe longitudinal de l'interface de fixation 40, mais présentent un léger angle d'inclinaison par rapport à celui-ci. Cette inclinaison vers la grande diagonale du plan de l'interface 40 permet d'augmenter la longueur effective des rails 41, sans accroître l'encombrement longitudinal total de l'interface 40, offrant ainsi une course de coulissement plus étendue. L'angle d'inclinaison des rails 41 est précisément déterminé pour garantir qu'en fin de course, lors du rangement complet de la tablette repas 100, le plateau 10 soit intégralement stocké sous l'interface 40. La figure 3 représente la tablette repas 100 dans sa position rangée, vue en perspective par-dessous, permettant notamment d'observer comment le plateau 10 est intégralement dissimulé sous l'interface de fixation 40 à l'issue du rangement. Comme évoqué précédemment, cette configuration compacte en position rangée est rendue possible par la légère inclinaison des rails de coulissement, qui garantit au plateau 10 de venir se positionner intégralement sous l'interface 40 lorsque le coulissement atteint sa butée finale.

Dans cette position rangée, le plateau 10 est orienté suivant sa profondeur, c'est-à-dire selon son plus grand côté 11. Cette orientation spécifique résulte directement de la cinématique particulière de la tablette 100, dans laquelle la rotation du plateau 10 autour de son axe de rotation est automatiquement couplée au coulissement des supports 20 et 30 lors du mouvement de rangement initié par le passager en poussant la poignée 21. Ainsi, le plateau 10 pivote progressivement durant son mouvement de coulissement, passant d'une position d'utilisation devant le passager, comme représenté sur les figures 1 et 2, à cette position de rangement optimisée sous l'interface 40.

Par ailleurs, l'extrémité 22 du premier support 20 surélève légèrement le plateau 10, facilitant ainsi son intégration entre l'interface 40 et le deuxième support 30, tout en assurant un espace suffisant pour accueillir confortablement l'épaisseur du plateau 10 en position rangée.

La figure 4 représente la tablette repas 100 selon trois positions successives distinctes : une position rangée en (a), une position intermédiaire ou semi-déployée en (b), et une position complètement déployée en (c). Ces trois positions sont représentées face à un siège passager 200 schématisé.

En position rangée (a), le plateau 10 est intégralement dissimulé sous l'interface de fixation 40. Dans cette configuration, la tablette 100 laisse un espace maximal noté d1 entre son bord et le siège passager 200, garantissant une parfaite liberté de mouvement pour l'entrée ou la sortie du passager.

La position intermédiaire ou semi-déployée représentée en (b) correspond à une extension partielle du plateau 10. Cette position intermédiairement déployée est particulièrement avantageuse, car elle ménage une distance d2 entre le plateau 10 et le siège passager 200, distance qui reste suffisante pour permettre au passager de quitter aisément son siège quelle que soit la position de l'allée, à gauche ou à droite par rapport à la tablette 100. En outre, dans cette position semi-déployée, la surface utile du plateau 10 demeure largement accessible, ce qui autorise par exemple la présence confortable d'un plateau repas ou d'autres objets nécessaires au passager. Afin d'assurer que la totalité de la surface du plateau 10 soit disponible dans cette position intermédiaire, un retrait de matière peut être avantageusement prévu au niveau de l'interface de fixation 40 pour éviter de masquer la petite portion de plateau encore partiellement recouverte, telle que représentée sur l'exemple de la figure 4 (b).

Enfin, la position complètement déployée représentée en (c) correspond à la configuration d'utilisation optimale décrite précédemment en référence aux figures 1 et 2. Dans cette position finale, la tablette 100 s'étend au maximum en avant vers le passager, laissant une distance d3 réduite entre le plateau 10 et le siège passager 200, pour offrir à l'utilisateur une surface pleinement accessible dans des conditions ergonomiques idéales pour un repas, un travail ou tout autre usage confortable durant le vol.

Ainsi, la cinématique de la tablette repas 100 propose avantageusement une configuration intermédiaire particulièrement utile, combinant à la fois un espace suffisant pour permettre au passager de sortir librement de son siège et une surface utile accessible optimisée.

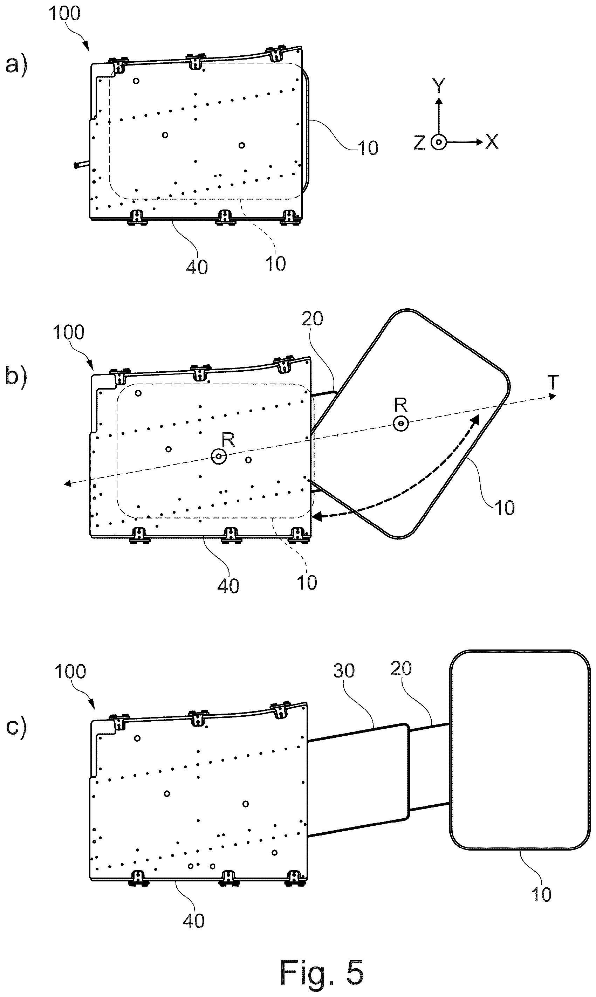

La figure 5 représente, dans un même référentiel, les trois positions successives décrites précédemment, selon une vue plane de dessus destinée à rendre clairement compte des différentes courses de coulissement et du mouvement de rotation du plateau 10.

En position rangée (a), le plateau 10 est intégralement dissimulé sous l'interface de fixation 40, à une bordure près. Cette position rangée est représentée en trait interrompu afin de visualiser précisément l'emplacement du plateau 10 sous l'interface 40 et sa compacité maximale lorsqu'il est stocké suivant sa plus grande dimension, réduisant ainsi au maximum l'espace de stockage nécessaire.

En passant à la position intermédiaire (b), on peut observer clairement la trajectoire combinée de coulissement suivant la direction T et de rotation du plateau 10 autour de l'axe R qui est mobile avec le premier support 20. Durant cette phase intermédiaire du mouvement, le plateau 10 pivote progressivement par rapport au premier support 20 tout en sortant de son logement situé sous l'interface 40.

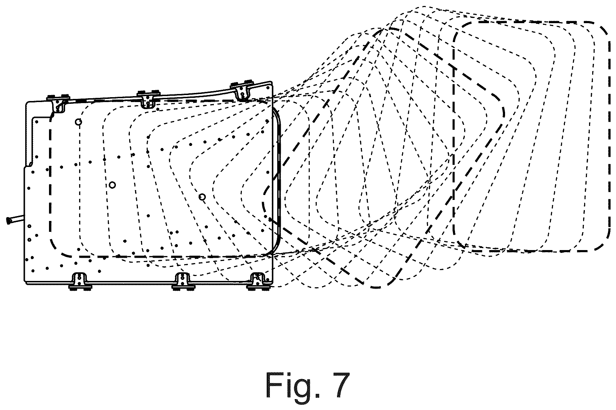

La figure 7 représente plus clairement comment la rotation du plateau s'effectue progressivement en étant couplée au déplacement longitudinal.

Cette cinématique particulière permet notamment au plateau 10 de dégager la quasi-totalité de sa surface utile, lorsqu'il est en position intermédiaire, tout en libérant suffisamment d'espace pour permettre la sortie du passager.

Enfin, en position complètement déployée (c), le plateau 10 se trouve face au passager, orienté parallèlement au passager selon sa longueur pour offrir une ergonomie optimale. Les deux supports 20 et 30 apparaissent entièrement étendus en coulissement télescopique, montrant clairement leur contribution respective à la course totale de déploiement. Cette vue plane illustre de manière évidente la longueur totale obtenue grâce au mécanisme télescopique et met en évidence l'amplitude maximale du mouvement depuis la position rangée jusqu'à la position finale complètement déployée.

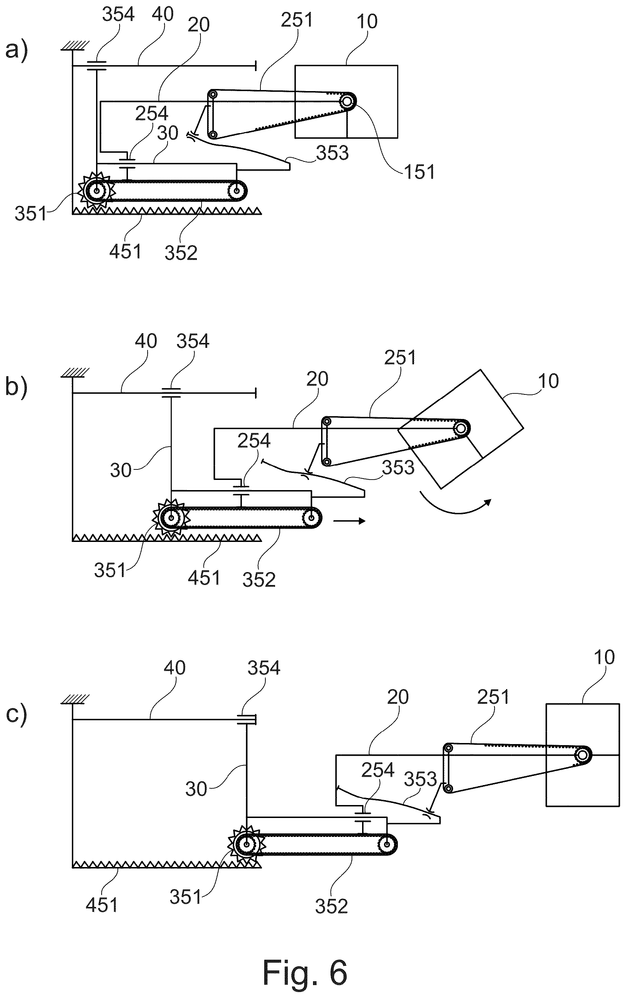

La figure 6 représente le schéma cinématique du mécanisme d'actionnement de la tablette repas 100, dans ses trois positions successives précédemment décrites : rangée en (a), intermédiaire ou semi-déployée en (b) et complètement déployée en (c).

Il convient de préciser que le schéma cinématique représenté n'est pas à l'échelle. En particulier, la position rangée (a) est volontairement représentée de manière étirée afin d'améliorer la lisibilité du mécanisme. En réalité, dans cette configuration, le plateau 10 ainsi que les supports 20 et 30 sont en grande partie superposés sous l'interface 40, ce qui compliquerait considérablement la compréhension du fonctionnement si les proportions réelles étaient respectées. Cette représentation schématique a donc pour seul objectif de mettre en évidence la structure et la cinématique du mécanisme d'actionnement, indépendamment de son encombrement réel.

Le mécanisme d'actionnement comprend notamment deux étages de coulissement guidés par une double glissière comprenant une première glissière 354, entre le deuxième support 30 et l'interface 40, et une deuxième glissière 254 entre le deuxième support 30 et le premier support 20. Cette configuration à double étage assure une compacité maximale de l'ensemble en position rangée (a).

Lors du déploiement vers la position intermédiaire (b), la sortie progressive de la tablette est assurée par un premier système de synchronisation mécanique comprenant une crémaillère fixe 451 liée à l'interface 40, un pignon 351 engrenant sur cette crémaillère, et une courroie crantée 352 montée sur ce pignon 351 et entrainant le premier support 20. Ce premier système permet de contrôler le coulissement des deux étages de glissières 354 et 254, selon une loi déterminée par la réduction mécanique existant entre le pignon 351 et la poulie solidaire de la courroie 352. Ainsi, pour une distance D parcourue par le premier étage de glissière 354, une distance réduite D/n (avec n généralement voisin de 2 dans l'exemple illustré) est parcourue simultanément par le deuxième étage 254, garantissant un mouvement fluide et coordonné des deux supports 20 et 30 lors du déploiement ou du rangement.

Le plateau 10 est relié au premier support 20 par un second système de synchronisation assurant sa rotation contrôlée durant le mouvement de déploiement ou de rangement. Ce second système comprend un pignon 151 lié rigidement au plateau 10 et une courroie crantée 251 reliant ce pignon 151 au premier support 20. La rotation du plateau 10, et donc du pignon 151, est contrôlée par l'interaction de la courroie 251 avec une came 353 fixée au deuxième support 30.

Le contact mécanique entre la came 353 et la courroie 251 guide ainsi la rotation progressive du plateau 10, lui permettant d'éviter tout obstacle potentiel de l'environnement immédiat du siège, tel qu'une porte ou une courbure particulière de l'environnement siège, tout en assurant un positionnement ergonomique précis à chaque étape du déploiement.

En effet, au fur et à mesure que le deuxième support 30 se déplace sous l'action du premier système, le contact ou l'embrayage avec la came 353 entraîne la rotation progressive du pignon 151 via la courroie 251. Le plateau 10 pivote ainsi autour de son axe de rotation au fur et à mesure de la sortie (ou de la rentrée) de la tablette repas 100. La forme de la came 353 peut être adaptée (par variation de sa courbure) pour ajuster précisément la loi de rotation du plateau 10, par exemple afin d'éviter tout obstacle.

Dans la dernière position (c), complètement déployée, le mécanisme atteint son extension maximale avec le plateau 10 orienté idéalement face au passager. À ce stade, le pignon 351 a parcouru l'intégralité de la crémaillère 451, ce qui correspond à une extension complète du deuxième support 30 par rapport à l'interface 40, tandis que la courroie 352 a simultanément positionné le premier support 20 à sa position finale sur la glissière 254. Le plateau 10 a achevé sa rotation grâce au pignon 151 entrainé par la courroie 251 en interaction avec la came 353.

Ainsi, la cinématique de la tablette repas 100 peut être décrite comme suit :
- En position rangée, le plateau 10 est entièrement dissimulé sous l'interface 40, avec les glissières 354 et 254 rétractées au maximum. Le pignon 151 et la courroie 251 sont en butée sur la came 353 dans une position fermée, la courroie 251 étant calée de manière à maintenir le plateau 10 en position parallèle à l'interface 40.
- En position intermédiaire, le premier support 20 et le deuxième support 30 ont commencé leur mouvement de coulissement différentiel, contrôlé par la crémaillère 451, le pignon 351 et la courroie 352. Simultanément, le plateau 10 amorce sa rotation sous l'action du pignon 151 et de la came 353. La flèche épaisse incurvée indique la trajectoire angulaire du plateau, tandis que la flèche droite montre la translation du deuxième support 30.
- En position complètement déployée, les glissières 354 et 254 ont atteint leur extension maximale, imposant au plateau 10 son orientation finale (typiquement perpendiculaire ou quasi perpendiculaire à l'interface 40) définie par la géométrie de la came 353. Le rapport de réduction n se traduit alors par une synchronisation précise entre la distance parcourue par le deuxième support 30 et celle parcourue par le premier support 20. Le plateau 10 est dans sa position de service, prêt à être utilisé par le passager.

Le mécanisme d'actionnement permet ainsi une synchronisation entre le coulissement télescopique et la rotation du plateau 10, garantissant un mouvement harmonieux et maitrisé entre les différentes positions de la tablette 100. Ce mécanisme a en outre été conçu avec un ajustement de certains paramètres tels que la courbure de la came 353 ou la valeur du rapport de réduction n entre le pignon 351 et la courroie 352 afin d'adapter précisément la trajectoire finale du plateau aux contraintes spécifiques de l'environnement siège dans lequel la tablette est intégrée.

Selon un mode de réalisation complémentaire avantageux, la tablette repas 100 peut intégrer un mécanisme d'éjection partielle, semblable à celui utilisé dans certains tiroirs, permettant au passager de sortir légèrement la tablette en exerçant simplement une légère pression sur le plateau 10 lorsqu'il est en position rangée. Cette pression libère automatiquement un mécanisme interne de verrouillage, qui projette le plateau 10 en avant sur une courte distance. Le passager peut ainsi aisément saisir la poignée 21 afin de poursuivre manuellement le déploiement de la tablette vers les positions intermédiaire ou complètement déployée, améliorant sensiblement l'ergonomie d'utilisation du dispositif.

En outre, lorsque la tablette repas 100 atteint sa position complètement déployée, un système de verrouillage mécanique permet de bloquer fermement la rotation du plateau 10, assurant ainsi sa stabilité et évitant toute rotation involontaire susceptible de gêner le passager pendant l'utilisation. Seule la translation inverse, activée par l'utilisateur lorsqu'il pousse le support 20 pour ranger la tablette, permet de libérer le verrouillage et de rétablir automatiquement la rotation couplée du plateau 10 vers sa position rangée.

## Revendications

1. Tablette repas (100) pour siège passager (200) d'aéronef, comprenant un plateau (10) déployable, formant une surface d'utilisation pour le passager, un premier support (20), sur lequel le plateau est articulé, et une interface (40) de fixation de ladite tablette dans un environnement du siège, ladite tablette étant **caractérisée en ce que** :
elle comprend un deuxième support (30) sur lequel le premier support (20) est monté coulissant suivant une direction de translation (T) parallèle au plan du plateau ;
**en ce que** le deuxième support (30) est monté coulissant sur l'interface (40) suivant la même direction de translation (T), de sorte que lesdits supports sont déployables par télescopage ;
**en ce que** le plateau (10) est monté rotatif sur le premier support (20), autour d'un axe de rotation (R) perpendiculaire au plan du plateau ;
et **en ce que** les mouvements de coulissement des supports (20, 30) et de rotation du plateau (10) sont couplés, de sorte que ledit plateau effectue une rotation progressive et automatique pendant son déploiement et son rangement.

2. Tablette repas selon la revendication 1, **caractérisée en ce qu'**elle présente une position rangée, dans laquelle le plateau (10) est intégralement et longitudinalement stocké sous l'interface (40), et une position complètement déployée dans laquelle le plateau (10) est placé transversalement devant le siège (200).

3. Tablette repas selon la revendication 1 ou 2, **caractérisée en ce qu'**elle présente en outre une position intermédiaire dans laquelle le plateau (10) est partiellement déployé suivant une direction oblique par rapport au siège (200), ledit plateau laissant une distance (d2) par rapport au siège suffisante pour permettre la sortie du passager aussi bien par la gauche que par la droite selon l'emplacement d'un couloir de sortie.

4. Tablette repas selon l'une quelconque des revendications précédentes, dans laquelle le premier support (20) est monté coulissant à l'intérieur du deuxième support (30), lesdits supports étant ainsi emboitables.

5. Tablette repas selon l'une quelconque des revendications précédentes, dans laquelle le premier support (20) comporte une extrémité (22) recevant le plateau (10) et configurée pour surélever ledit plateau au-dessus du deuxième support (30) et au-dessous de l'interface (40).

6. Tablette repas selon l'une quelconque des revendications précédentes, dans laquelle l'interface (40) comporte sur sa face inférieure des rails (41) de coulissement du deuxième support (30).

7. Tablette repas selon la revendication 6, dans laquelle les rails (41) sont inclinés par rapport à une direction longitudinale de l'interface (40) pour augmenter la course du deuxième support (30).

8. Tablette repas selon l'une quelconque des revendications précédentes, comprenant un mécanisme d'actionnement (151, 251, 254, 351, 352, 353, 354, 451) configuré pour assurer le coulissement simultané des premier et deuxième support (20, 30) et la rotation synchronisée et progressive du plateau (10), ledit mécanisme comprenant : un premier pignon (151) lié au plateau et monté dans une première courroie crantée (251) liée au premier support (20), ladite première courroie crantée glissant sur une came (353) liée au deuxième support (30), ledit deuxième support comprenant une deuxième courroie (352) entrainant en translation le premier support (20) via un premier étage de glissière (254), ladite deuxième courroie étant elle-même entrainée en translation par un deuxième pignon (351) du deuxième support (30) coopérant avec une crémaillère (451) de l'interface (40), ledit deuxième pignon entrainant le deuxième support via un deuxième étage de glissière (354).

9. Tablette repas selon la revendication 8, dans laquelle la came (353) présente une courbure définissant le chemin de la première courroie (251) et la trajectoire du plateau (10).

10. Unité de siège pour passager d'avion, comprenant un siège (200) et **caractérisée en ce qu'**elle comprend une tablette repas (100) selon l'une des revendications précédentes installée devant ledit siège.
